# EUROPEAN PATENT SPECIFICATION

(11) **EP 3 138 389 B1**
(45) Date of publication and mention of the grant of the patent: **13.03.2019**
(21) Application number: 15785222.9
(22) Date of filing: 28.04.2015
(51) Int. Cl.: A01G 9/24, A01G 9/14

(54) **APPARATUS AND METHOD FOR MAXIMIZING YIELD BY EXTENDING HARVEST PERIOD OF EDIBLE PLANTS IN PLANT CULTIVATION MANAGEMENT DEVICE**
VORRICHTUNG UND VERFAHREN ZUR MAXIMIERUNG DES ERTRAGS DURCH VERLÄNGERUNG DER ERNTEPERIODE ESSBARER PFLANZEN BEI EINER VORRICHTUNG ZUR PFLANZENZUCHTVERWALTUNG
APPAREIL ET PROCÉDÉ PERMETTANT D'OPTIMISER LE RENDEMENT EN ALLONGEANT LA PÉRIODE DE RÉCOLTE DE PLANTES COMESTIBLES DANS UN DISPOSITIF DE GESTION DE LA CULTURE DE PLANTES

(30) Priority: 28.04.2014 KR 20140050468
(43) Date of publication of application: 08.03.2017
(73) Proprietor: Wang, Youngsung, Pyeongtaek-si, Gyeonggi-do 451-862 (KR)
(72) Inventor: Wang, Youngsung, Pyeongtaek-si, Gyeonggi-do 451-862 (KR)
(74) Representative: Zardi, Marco
(86) International application number: PCT/KR2015/004208
(87) International publication number: WO 2015/167196

(56) References cited:
- JP-A- H1 052 175
- JP-A- 2000 069 858
- JP-A- 2010 273 601
- KR-A- 20120 062 464
- US-A1- 2010 319 251

## Description

### BACKGROUND

### Field of the Present Disclosure

The present disclosure relates to a plant cultivation system and method for extending a harvesting period of an edible plant to maximize a yield thereof using a cultivation managing container. More particularly, the present disclosure relates to a plant cultivation system and method for extending a harvesting period of an edible plant to maximize a yield thereof using a cultivation managing container in a facility or on a bare ground by suppressing a bolting of the edible plant.

### Discussion of the Related Art

Generally, an edible plant is planted as a seeding plant on a bare ground and are cultivated to become a grown plant. For this, furrows and ridges are formed in the bare ground to secure a path for a worker for the edible plant.

The above conventional cultivation has following shortcoming regardless of whether the edible plant is planted in the facility or on the bare ground:

The furrows and ridges may reduce a cultivation area. Thus, this may decrease a yield of the edible plant. Further, during the harvest thereof, the worker harvests the plants in a crouched state. This may lead to a slow harvesting rate of the plants. Further, this may result in an increase in a fatigue of the worker to further reduce the yield of the plants. This may lead to difficulty in obtaining the manual worker.

Further, due to a temperature change, the edible plant may have undesirable cultivation conditions, leading to an early bolting of the edible plant to shorten the harvesting period thereof to reduce the yield thereof.

When the plant is cultivated in the bare ground, a base manure including fertilizers is mixed into the soil, and, then, only a supplementary manure and water are fed thereto. Thus, the target and/or balanced cultivation may not be achieved.

Further, when the plant is cultivated in the bare ground, the watering is conducted only during a vigorous growth time of the plant. Thus, the root zone of the edible plant may be poor at respiration thereof. This may lead to an early bolting to shorten the harvest period.

Thus, using the conventional cultivation approach, the yield of the edible plants may be lowered.

JP 2000 069858 A and JP H10 52175 A disclose facilities for a plant cultivation that stable the harvesting period to maximize the yield.

### SUMMARY

The present disclosure provides a plant cultivation system and method for extending a harvesting period of an edible plant to maximize a yield thereof in a facility, wherein movable cultivation managing containers are used to reduce a walking area for the worker during the harvest to increase a cultivation space, wherein the bolting of the edible plant may be suppressed to extend the harvesting period 2 to 3 times compared to the conventional harvesting period by establishing air circulation channels between the cultivation managing containers and enabling the selective supply of the cold or hot airs to the air circulation channel to improve transpiration of the edible plant.

Further, the present disclosure provides a plant cultivation system and method for extending a harvesting period of an edible plant to maximize a yield thereof, including a drip-nourishing device configured to allow a selective supply of a liquid fertilizer, a mineral, and/or a microorganism to the cultivation managing containers, thereby to realize a target cultivation for the edible plant and a balanced growth of the edible plant in the cultivation managing containers.

Furthermore, the present disclosure provides a plant cultivation system and method for extending a harvesting period of an edible plant to maximize a yield thereof on a bare ground, wherein when a root zone of the edible plant has an increase in a respiration amount thereof due to a temperature rise in a hot condition, the water in the cultivation managing container is discharged to increase a porosity therein by a reduced amount of the water, thereby to increase a dissolved oxygen amount due to the increase in the porosity to suppress a bolting of the edible plant, whereby to extend the harvesting period 2 to 3 times compared to the conventional harvesting period.

Furthermore, the present disclosure provides a plant cultivation system and method for extending a harvesting period of an edible plant to maximize a yield thereof, wherein at least two supports are configured to support each cultivation managing container at a height determined such that a worker or operator harvests the edible plant in a standing state, thereby to improve a labor efficiency of the worker to increase the yield of the edible plant in the cultivation managing container.

Moreover, the present disclosure provides a plant cultivation system and method for extending a harvesting period of an edible plant to maximize a yield thereof, wherein an array of cultivation ports is rooted into the fertilizer mixed soil of the cultivation managing container while a seeding plant and/or grown plant for the edible plant is planted in the cultivation port, thereby to remove the separation of the edible plants from the cultivation ports.

In one aspect of the present disclosure, there is provided a plant cultivation system for extending a harvesting period of an edible plant to maximize a yield thereof, the system comprising: an arrangement of cultivation managing containers, each container including a moisture absorption material including coarse/fine stone pieces, pearlite, and/or coarse sands on a bottom thereof, wherein the moisture absorption material is stacked at a predetermined height, wherein water is filled in the cultivation managing container at the same height as the predetermined height to supply a moisture to the moisture absorption material, wherein the cultivation managing container includes a moisture communication material on the moisture absorption material, and a fertilizer mixed soil on the moisture communication material; an array of cultivation ports arranged in each cultivation managing container, wherein each cultivation port is rooted into the fertilizer mixed soil of the cultivation managing container, wherein the plural cultivation ports are spaced from each other to keep a cultivation space of the edible plant, wherein a seeding plant and/or grown plant for the edible plant is planted in the cultivation port; at least two supports configured to support each cultivation managing container at a height determined such that a worker or operator harvests the edible plant in a standing state, wherein the at least two supports are spacedly arranged to secure an air circulation channel; at least one air duct disposed between the neighboring supports, wherein the air duct extends in the arrangement direction of the cultivation managing containers, wherein the air duct has an air hole to allow a selective supply of cold and hot airs to the air circulation channel, thereby to improve transpiration of the edible plant to suppress bolting of the edible plant; and
a blowing fan disposed at one end of the air duct to allow a forced air flow through the air duct.

In one implementation, the system further comprises a container rail disposed between the supports and the cultivation managing containers, wherein the container rail is configured to allow a free slide thereon of the cultivation managing containers, wherein the container rail extends in the arrangement direction of the cultivation managing containers, wherein the free slide of the cultivation managing containers adjusts a space between the adjacent cultivation managing containers to keep a cultivation space for the edible plant; and a drip-nourishing device configured to allow a selective supply of a liquid fertilizer, a mineral, and/or a microorganism to the cultivation managing containers, thereby to realize a target cultivation for the edible plant.

In one aspect of the present disclosure, there is provided a method for extending a harvesting period of an edible plant to maximize a yield thereof in a facility, the method comprising: providing a plurality of cultivation managing containers, each container including a moisture absorption material including coarse/fine stone pieces, pearlite, and/or coarse sands on a bottom thereof, wherein the moisture absorption material is stacked at a predetermined height, wherein water is filled in the cultivation managing container at the same height as the predetermined height to supply a moisture to the moisture absorption material, wherein the cultivation managing container includes a moisture communication material on the moisture absorption material, and a fertilizer mixed soil on the moisture communication material; arranging the plurality of cultivation managing containers on supports, wherein each support is configured to support each cultivation managing container at a height determined such that a worker or operator harvests an edible plant in a standing state, wherein the at least two supports are spacedly arranged to establish an air circulation channel; rooting an array of cultivation ports into each cultivation managing container, wherein each cultivation port is rooted into the fertilizer mixed soil of the cultivation managing container, wherein the plural cultivation ports are spaced from each other to keep a cultivation space of the edible plant, wherein a seeding plant and/or grown plant for the edible plant is planted in the cultivation port; and performing a selective supply of cold and hot airs to the air circulation channel to improve transpiration of the edible plant to suppress bolting of the edible plant, using at least one air duct disposed between the neighboring supports and extending in the arrangement direction of the cultivation managing containers, wherein the air duct has an air hole to supply the air to the air circulation channel.

In one implementation, the method further comprises sliding the cultivation managing containers on a container rail such that neighboring edible plants becoming grown plants do not contact each other, wherein the rail is disposed between the support and the cultivation managing container, and extends in an arrangement direction of the supports and the cultivation managing containers; and after the grown edible plants are harvested, repeating the rooting operation of new cultivation pots, the selective supply of cold and hot airs, and the sliding operation of the cultivation managing containers.

In one implementation, the method further comprises selectively feeding a liquid fertilizer, a mineral, and/or a microorganism to the cultivation managing containers to achieve a target cultivation for the edible plan, wherein the supply of the air to the air circulation channel uses a blowing fan disposed at one end of the air duct to allow a forced air flow through the air duct.

In one aspect of the present disclosure, there is provided a method for extending a harvesting period of an edible plant to maximize a yield thereof on a bare ground, the method comprising: providing a plurality of cultivation managing containers, each container including a moisture absorption material including coarse/fine stone pieces, pearlite, and/or coarse sands on a bottom thereof, wherein the moisture absorption material is stacked at a predetermined height, wherein water is filled in the cultivation managing container at the same height as the predetermined height to supply a moisture to the moisture absorption material, wherein the cultivation managing container includes a moisture communication material on the moisture absorption material, and a fertilizer mixed soil on the moisture communication material; arranging the plurality of cultivation managing containers on supports, wherein each support is configured to support each cultivation managing container at a height determined such that a worker or operator harvests an edible plant in a standing state, wherein the at least two supports are spacedly arranged to establish an air circulation channel; rooting an array of cultivation ports into each cultivation managing container, wherein each cultivation port is rooted into the fertilizer mixed soil of the cultivation managing container, wherein the plural cultivation ports are spaced from each other to keep a cultivation space of the edible plant, wherein a seeding plant and/or grown plant for the edible plant is planted in the cultivation port; and when a root zone of the edible plant has an increase in a respiration amount thereof due to a temperature rise in a hot condition, discharging the water in the cultivation managing container to increase a porosity therein by a reduced amount of the water, thereby to increase a dissolved oxygen amount due to the increase in the porosity to suppress a bolting of the edible plant.

In accordance with the present disclosure, the movable cultivation managing containers may be used to reduce a walking area for the worker during the harvest to increase a cultivation space. Further, the bolting of the edible plant may be suppressed to extend the harvesting period 2 to 3 times compared to the conventional harvesting period by establishing air circulation channels between the cultivation managing containers and enabling the selective supply of the cold or hot airs to the air circulation channel to improve transpiration of the edible plant.

Further, in accordance with the present disclosure, the drip-nourishing device may allow a selective supply of a liquid fertilizer, a mineral, and/or a microorganism to the cultivation managing containers, thereby to realize a target cultivation for the edible plant and a balanced growth of the edible plant in the cultivation managing containers.

Furthermore, in accordance with the present disclosure, when a root zone of the edible plant has an increase in a respiration amount thereof due to a temperature rise in a hot condition, the water in the cultivation managing container may be discharged to increase a porosity therein by a reduced amount of the water, thereby to increase a dissolved oxygen amount due to the increase in the porosity to suppress a bolting of the edible plant, whereby to extend the harvesting period 2 to 3 times compared to the conventional harvesting period.

Furthermore, in accordance with the present disclosure, the at least two supports may support each cultivation managing container at a height determined such that a worker or operator harvests the edible plant in a standing state, thereby to improve a labor efficiency of the worker to increase the yield of the edible plant in the cultivation managing container.

Moreover, in accordance with the present disclosure, the array of cultivation ports may be rooted into the fertilizer mixed soil of the cultivation managing container while a seeding plant and/or grown plant for the edible plant is planted in the cultivation port, thereby to remove the separation of the edible plants from the cultivation ports.

### BRIEF DESCRIPTION OF THE DRAWINGS

FIG. 1 shows a high level view of a plant cultivation system for extending a harvesting period of an edible plant to maximize a yield of the edible plant in accordance with the present disclosure.
FIG. 2 shows a perspective view of a plant cultivation system for extending a harvesting period of an edible plant to maximize a yield of the edible plant in accordance with the present disclosure.

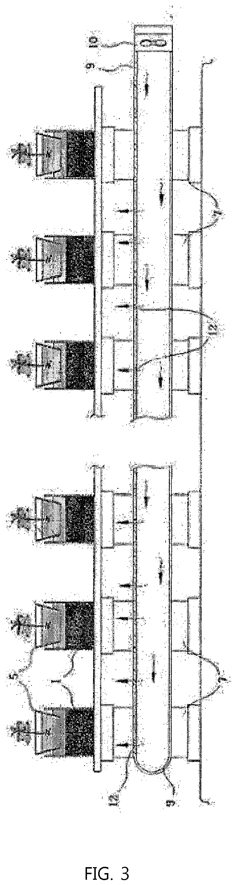

FIG. 3 shows a cross-sectional view of a plant cultivation system for extending a harvesting period of an edible plant to maximize a yield of the edible plant in accordance with the present disclosure.
FIG. 4 shows a cross-sectional view of a cultivation managing container receiving a cultivation port therein in accordance with the present disclosure.
FIG. 5 shows a flow chart of a plant cultivation method for extending a harvesting period of an edible plant to maximize a yield of the edible plant in accordance with the present disclosure, wherein the method is applied to a facility.
FIG. 6 shows a flow chart of a plant cultivation method for extending a harvesting period of an edible plant to maximize a yield of the edible plant in accordance with the present disclosure, wherein the method is applied to a bare ground.

### DETAILED DESCRIPTIONS

Hereinafter, a plant cultivation system and method for extending a harvesting period of an edible plant to maximize a yield thereof in accordance with the present disclosure will be described in details with reference to attached drawings.

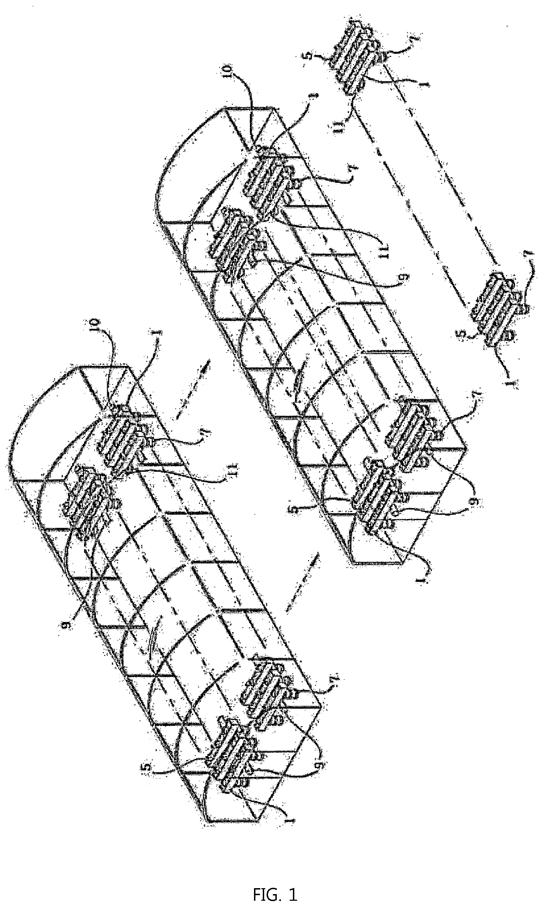

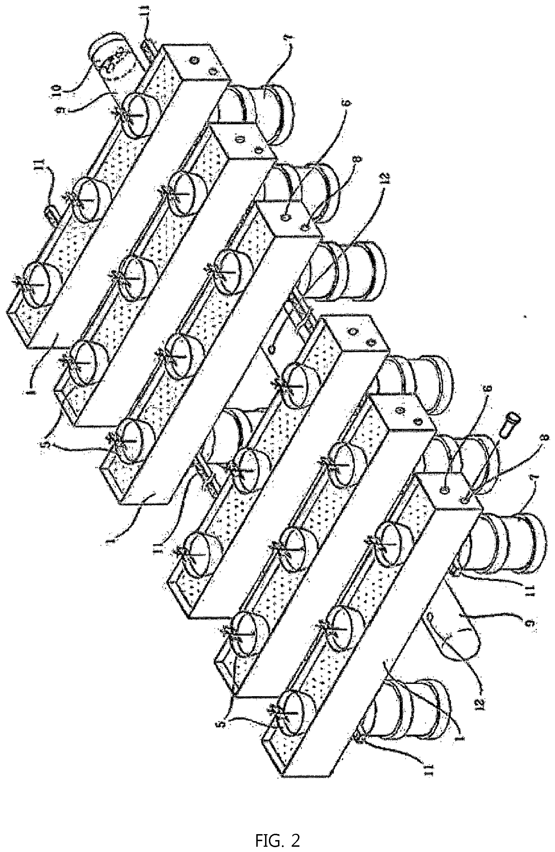

Referring to FIG. 1 and FIG. 2, the plant cultivation system for extending a harvesting period of an edible plant to maximize a yield of the edible plant in accordance with the present disclosure may include a cultivation managing container 1, a cultivation port 5, a support 7, an air duct 9, blowing fan 10, a container rail 11, and a drip-nourishing device (not shown).

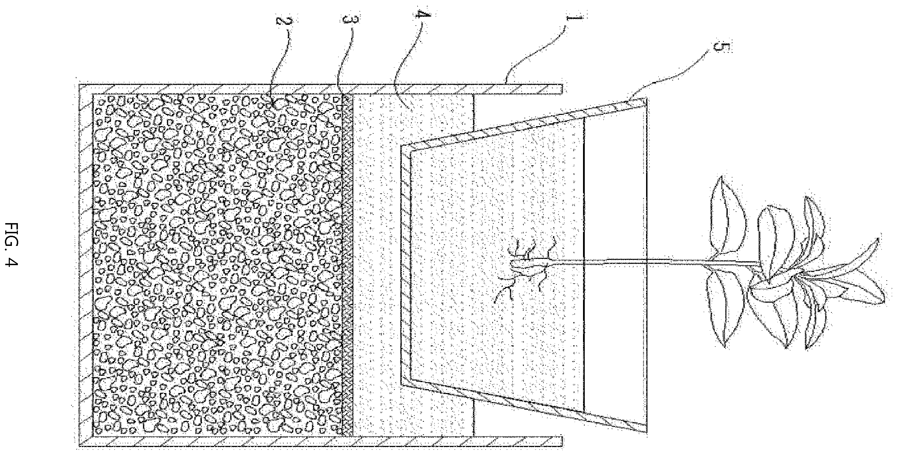

The cultivation managing container 1 may include moisture absorption material 2 including coarse/fine stone pieces, pearlite, and/or coarse sands on a bottom thereof. The moisture absorption material 2 may be stacked at a given height. Water may be filled in the cultivation managing container 1 at the same height as the given height to supply the moisture to the moisture absorption material 2. The cultivation managing container 1 may include a moisture communication material 3 on the moisture absorption material 2, and a fertilizer mixed soil 4 on the moisture communication material 3. That is, the moisture communication material 3 may separate the moisture absorption material 2 from the fertilizer mixed soil 4, and may communicate the moisture therebetween. The fertilizer mixed soil 4 may include a mixture of a conventional soil and a small amount of a solid fertilizer. As shown in FIG. 4, the cultivation port 5 may be seated in the fertilizer mixed soil 4.

In this connection, the cultivation managing container 1 may have, by way of example, a length 2 to 3m, a width 0.1 m, a height 0.12 to 0.15m. The water therein may not exceed the height of the moisture absorption material 2. For this, a water level adjustment hole 6 may be formed therein. Below the water level adjustment hole 6, a closeable/openable nozzle 8 may be present. The nozzle 8 may act to increase a porosity in a root zone of the edible plant to increase a dissolved oxygen therein by a reduction amount of the water due to the water discharge.

The cultivation port 5 as shown in FIG. 4 may be made of a synthetic resin or biodegradable paper pulp with a vegetable oil coating in a cured state. The cultivation port 5 may be rooted into the fertilizer mixed soil 4 of the cultivation managing container 1. The plural cultivation ports 5 may be arranged in the cultivation managing container 1 with a spacing which may be set to keep a suitable cultivation space of the edible plant. A seeding plant and/or grown plant may be planted in the cultivation port 5. Further, the cultivation port 5 receiving the seeding plant and/or grown plant for the edible plant may be easily and rapidly seated and rooted in the fertilizer mixed soil 4 of the cultivation managing container 1, thereby to improve a labor efficiency and thus a productivity.

The support 7 may be configured to support the cultivation managing container 1 at a height determined such that the worker or operator harvests the edible plant in a standing state. Specifically, at least two supports 7 may be spacedly arranged to support the cultivation managing container 1. The multiple cultivation managing containers 1 may be spaced from each other, and the multiple supports 7 may be spaced from each other, thereby to secure an air circulation channel. Through the air circulation channel, a convection or forced circulation may occur. This may improve transpiration of the edible plant. Further, the support 7 may have a multiple layered stack form, where the height thereof may be adjusted. Furthermore, the support 7 may have a small volume to allow a massive movement thereof.

The air duct 9 may have an elongate tube shape. The air duct 9 may be disposed between the neighboring supports 7. The air duct 9 may extend
below the cultivation managing containers 1 and in a direction perpendicular to the extension direction of the cultivation managing container 1. The air duct 9 may extend across the multiple cultivation managing containers 1. The air duct 9 may have an air hole 12 to allow a selective supply of cold and hot airs to the air circulation channel. The selective supply of cold and hot airs may improve transpiration of the edible plant cultivated in the cultivation managing container 1 to suppress bolting of the edible plant. In this connection, the bolting may mean no possibility of a new sprout and thus a termination of the harvesting period of the edible plant. This may be due to a bad cultivation condition including a temperature when the edible plant becomes a grown plant.

To be specific, the air duct 9 may supply a cold air in a hot condition or supply a hot air in a cold condition to improve transpiration of the edible plant cultivated in the cultivation managing container 1 to suppress bolting of the edible plant.

The blowing fan 10 may be disposed at one end of the air duct 9 to allow a forced air flow through the air duct 9. Further, the blowing fan 10 may supply a hot or cold air from a heat exchanger (not shown) to the air duct 9.

The container rail 11 may be disposed between the support 7 and the cultivation managing container 1. The container rail 11 may allow a free slide thereon of the cultivation managing container 1. The container rail 11 may extend in a parallel manner to the air duct as shown in FIG. 2. The free slide thereon of the cultivation managing container 1 may adjust a space between the adjacent cultivation managing containers 1 to keep a suitable cultivation space for the edible plant. For example, a suppression of inter-contact or overlapping between the neighboring edible plants may be achieved by the free slide thereon of the cultivation managing container 1. Further, the air circulation channel may also be achieved by the free slide thereon of the cultivation managing container 1.

The drip-nourishing device (not shown) may include a storage to store therein a growth adjustment agent to be supplied to the edible plant, a pump to pump the growth adjustment agent, and a supply pipe to supply the pumped growth adjustment agent into the cultivation managing container 1. The growth adjustment agent may be selected based on a type of the edible plant. The growth adjustment agent may include a liquid fertilizer, a mineral, and/or a microorganism, etc. This may realize a target cultivation and/or a balance growth of the edible plant.

The above-described components of the system in accordance with the present disclosure may be selectively installed in a facility or on a bare ground. A method for extending the harvesting period of the edible plant to maximize a yield thereof using the cultivation managing container 1 will be described below.

First, as shown in FIG. 4, when the system of the present disclosure is installed in a facility, the cultivation managing container 1, cultivation port 5, support 7, air duct 9, blowing fan 10, container rail 11, and drip-nourishing device may be installed in a desired manner.

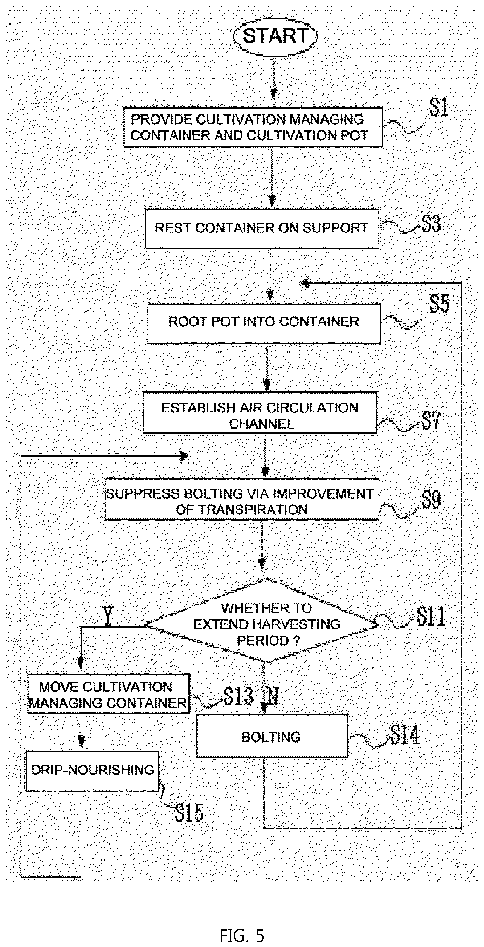

The method for extending the harvesting period of the edible plant to maximize a yield thereof using the cultivation managing container in accordance with the present disclosure, as shown in FIG. 5 may be applied to the case when the system of the present disclosure is installed in a facility. First, the moisture absorption material 2 including coarse/fine stone pieces, pearlite, and/or coarse sands may be received in the cultivation managing container 1 on the bottom thereof. The moisture absorption material 2 may be stacked at a given height. Water may be filled in the cultivation managing container 1 at the same height as the given height to supply the moisture to the moisture absorption material 2. The seeding plant and grown plant for the edible plant may be planted into the multiple cultivation ports 5. The height of the support 7 may be adjusted to comply with a height to allow the harvest of the plant at the standing state of the worker. Then, the cultivation managing container 1 may be rested on the support 7. In this connection, the cultivation managing container 1 may include the moisture communication material 3 on the moisture absorption material 2, and the fertilizer mixed soil 4 on the moisture communication material 3.

The cultivation port 5 having the seeding plant and grown plant planed therein may be migrated from a plant cultivation tray to the cultivation managing container 1, to be specific, into the fertilizer mixed soil 4. The spacing between the ports 5 may be adjusted to secure a suitable cultivation space for the edible plant. The cultivation port 5 may be fixed into the cultivation managing container 1 while the port 5 may be slightly buried into the fertilizer mixed soil (port migration).

Thereafter, the spacing between the cultivation managing containers 1 may be adjusted to secure a suitable cultivation space for the edible plant and to secure the air circulation channel to allow an air convectional circulation (air circulation channel establishment).

After the air circulation channel is secured, a selective supply of the hot or cold air through the air duct 9 and multiple air hole 12 via the air circulation channel to the cultivation managing container 1 may be conducted to promote transpiration of the edible plant cultivated in the cultivation managing container 1 to suppress bolting of the edible plant (bolting suppression).

In this connection, the blowing fan 10 disposed at one end of the air duct 9 may conduct a forced air flow through the air duct 9 to the air hole 12.

Then, using the container rail 11 disposed between the support 7 and the cultivation managing container 1, and extending in an arrangement direction of the supports 7 and the cultivation managing containers 1, the cultivation managing containers 1 may slide and move such that the neighboring edible plants becoming the grown plants 7 days after the migration of the cultivation port 5 do not contact each other. This may secure the spacing between the cultivation managing containers 1 to prevent the inter-contact between the neighboring grown edible plants. In this connection, at a harvesting time, the edible plant may have a volume expanding beyond the cultivation managing container 1. For this reason, to prevent the inter-contact between the neighboring grown edible plants, the spacing between the cultivation managing containers 1 may be adjusted via the free slide on the container rail 11 of the cultivation managing containers 1 (spacing adjustment).

Further, during the air circulation channel establishment, a liquid fertilizer, a mineral, and/or a microorganism may be selectively fed to the cultivation managing container 1 to achieve a target cultivation for the edible plan (drip-nourishing). In this connection, the liquid fertilizer may include twelve essential nutrient components, the mineral may include various minerals, and the microorganism may include various anaerobic microorganisms.

After the adjustment of the spacing between the cultivation managing containers 1, the edible plant may be harvested. Then, the port migration, air circulation channel establishment, bolting suppression, spacing adjustment, and drip-nourishing may be repeated. In this way, the bolting may be suppressed to extend the harvesting period. When the bolting occurs, the harvest may be terminated. Then, the cultivation port 5 may be replaced. Then, the air circulation channel establishment, bolting suppression, spacing adjustment, and drip-nourishing may be repeated. Thus, the harvesting period may be extended 2 to 3 times compared to the conventional cultivation, and, thus, the yield may increase 2 to 3 times compared to the conventional cultivation.

The above-described components of the system in accordance with the present disclosure may be installed on a bare ground. A method for extending the harvesting period of the edible plant to maximize a yield thereof using the cultivation managing container 1 may be applied to the bare ground cultivation.

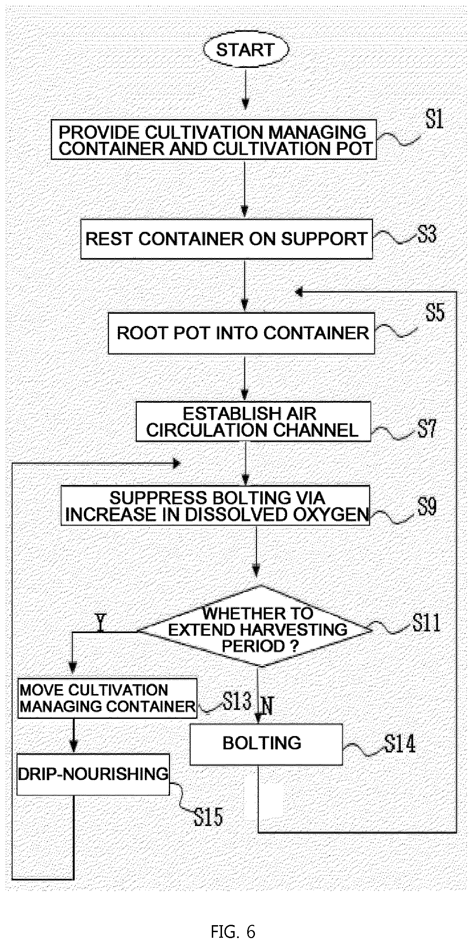

The method for extending the harvesting period of the edible plant to maximize a yield thereof using the cultivation managing container in accordance with the present disclosure, as shown in FIG. 6 may be applied to the case when the system of the present disclosure is installed on the bare ground. First, the moisture absorption material 2 including coarse/fine stone pieces, pearlite, and/or coarse sands may be received in the cultivation managing container 1 on the bottom thereof. The moisture absorption material 2 may be stacked at a given height. Water may be filled in the cultivation managing container 1 at the same height as the given height to supply the moisture to the moisture absorption material 2. The seeding plant and grown plant for the edible plant may be planted into the multiple cultivation ports 5. The height of the support 7 may be adjusted to comply with a height to allow the harvest of the plant at the standing state of the worker. Then, the cultivation managing container 1 may be rested on the support 7. In this connection, the cultivation managing container 1 may include the moisture communication material 3 on the moisture absorption material 2, and the fertilizer mixed soil 4 on the moisture communication material 3.

The cultivation port 5 having the seeding plant and grown plant planed therein may be migrated from a plant cultivation tray to the cultivation managing container 1, to be specific, into the fertilizer mixed soil 4. The spacing between the ports 5 may be adjusted to secure a suitable cultivation space for the edible plant. The cultivation port 5 may be fixed into the cultivation managing container 1 while the port 5 may be slightly buried into the fertilizer mixed soil (port migration).

Thereafter, the spacing between the cultivation managing containers 1 may be adjusted to secure a suitable cultivation space for the edible plant and to secure the air circulation channel to allow an air convectional circulation (air circulation channel establishment).

Further, when a root of the plant penetrating the fertilizer mixed soil and moisture communication material and reaching the moisture absorption material has an increase in a respiration amount thereof due to a temperature rise in a hot condition, the nozzle 8 may be opened to discharge the water in the cultivation managing container 1 to increase a porosity therein by a reduced amount of the water. This may increase a dissolved oxygen amount to increase the respiration amount in the root zone to suppress the bolting of the edible plant (bolting suppression). In this connection, the moisture may continue to be supplied to the edible plant using the water having a reduced amount.

Then, using the container rail 11 disposed between the support 7 and the cultivation managing container 1, and extending in an arrangement direction of the supports 7 and the cultivation managing containers 1, the cultivation managing containers 1 may slide and move such that the neighboring edible plants becoming the grown plants 7 days after the migration of the cultivation port 5 do not contact each other. This may secure the spacing between the cultivation managing containers 1 to prevent the inter-contact between the neighboring grown edible plants. In this connection, at a harvesting time, the edible plant may have a volume expanding beyond the cultivation managing container 1. For this reason, to prevent the inter-contact between the neighboring grown edible plants, the spacing between the cultivation managing containers 1 may be adjusted via the free slide on the container rail 11 of the cultivation managing containers 1 (spacing adjustment).

Further, during the air circulation channel establishment, a liquid fertilizer, a mineral, and/or a microorganism may be selectively fed to the cultivation managing container 1 to achieve a target cultivation for the edible plan (drip-nourishing). In this connection, the liquid fertilizer may include twelve essential nutrient components, the mineral may include various minerals, and the microorganism may include various anaerobic microorganisms.

After the adjustment of the spacing between the cultivation managing containers 1, the edible plant may be harvested. Then, the port migration, air circulation channel establishment, bolting suppression, spacing adjustment, and drip-nourishing may be repeated. In this way, the bolting may be suppressed to extend the harvesting period. When the bolting occurs, the harvest may be terminated. Then, the cultivation port 5 may be replaced. Then, the air circulation channel establishment, bolting suppression, spacing adjustment, and drip-nourishing may be repeated. Thus, the harvesting period may be extended 2 to 3 times compared to the conventional cultivation, and, thus, the yield may increase 2 to 3 times compared to the conventional cultivation.

## Claims

1. A plant cultivation system for extending a harvesting period of an edible plant to maximize a yield thereof, the system comprising:
an arrangement of cultivation managing containers (1), each container including a moisture absorption material (2) including coarse/fine stone pieces, pearlite, and/or coarse sands on a bottom thereof, wherein the moisture absorption material (2) is stacked at a predetermined height, wherein water is filled in the cultivation managing container (1) at the same height as the predetermined height to supply a moisture to the moisture absorption material (2), wherein the cultivation managing container (1) includes a moisture communication material (3) on the moisture absorption material (2), and a fertilizer mixed soil (4) on the moisture communication material (3);
an array of cultivation ports (5) arranged in each cultivation managing container (1), wherein each cultivation port (5) is rooted into the fertilizer mixed soil (4) of the cultivation managing container, wherein the plural cultivation ports (5) are spaced from each other to keep a cultivation space of the edible plant,
wherein a seeding plant and/or grown plant for the edible plant is planted in the cultivation port (5);
at least two supports (7) configured to support each cultivation managing container (1) at a height determined such that a worker or operator harvests the edible plant in a standing state,
wherein the at least two supports (7) are spacedly arranged to secure an air circulation channel;
at least one air duct (9) disposed between the neighboring supports (7), wherein the air duct (9) extends in the arrangement direction of the cultivation managing containers, wherein the air duct (9) has an air hole (12) to allow a selective supply of cold and hot airs to the air circulation channel, thereby to improve transpiration of the edible plant to suppress bolting of the edible plant; and
a blowing fan (10) disposed at one end of the air duct (9) to allow a forced air flow through the air duct (9).

2. The system of claim 1, further comprising:
a container rail (11) disposed between the supports (7) and the cultivation managing containers (1), wherein the container rail is configured to allow a free slide thereon of the cultivation managing containers, wherein the container rail extends in the arrangement direction of the cultivation managing containers, wherein the free slide of the cultivation managing containers adjusts a space between the adjacent cultivation managing containers to keep a cultivation space for the edible plant; and
a drip-nourishing device configured to allow a selective supply of a liquid fertilizer, a mineral, and/or a microorganism to the cultivation managing containers, thereby to realize a target cultivation for the edible plant.

3. A method for extending a harvesting period of an edible plant to maximize a yield thereof in a facility, the method comprising:
providing a plurality of cultivation managing containers (1), each container including a moisture absorption material (2) including coarse/fine stone pieces, pearlite, and/or coarse sands on a bottom thereof, wherein the moisture absorption material is stacked at a predetermined height, wherein water is filled in the cultivation managing container at the same height as the predetermined height to supply a moisture to the moisture absorption material, wherein the cultivation managing container includes a moisture communication material (3) on the moisture absorption material, and a fertilizer mixed soil (4) on the moisture communication material;
arranging the plurality of cultivation managing containers on supports (7), wherein each support is configured to support each cultivation managing container at a height determined such that a worker or operator harvests an edible plant in a standing state, wherein the at least two supports are spacedly arranged to establish an air circulation channel;
rooting an array of cultivation ports (5) into each cultivation managing container, wherein each cultivation port is rooted into the fertilizer mixed soil of the cultivation managing container, wherein the plural cultivation ports are spaced from each other to keep a cultivation space of the edible plant, wherein a seeding plant and/or grown plant for the edible plant is planted in the cultivation port; and
performing a selective supply of cold and hot airs to the air circulation channel to improve transpiration of the edible plant to suppress bolting of the edible plant, using at least one air duct (9) disposed between the neighboring supports and extending in the arrangement direction of the cultivation managing containers, wherein the air duct has an air hole to supply the air to the air circulation channel.

4. The method of claim 3, further comprising sliding the cultivation managing containers on a container rail (11) such that neighboring edible plants becoming grown plants do not contact each other, wherein the rail is disposed between the support and the cultivation managing container, and extends in an arrangement direction of the supports and the cultivation managing containers; and
after the grown edible plants are harvested, repeating the rooting operation of new cultivation pots, the selective supply of cold and hot airs, and the sliding operation of the cultivation managing containers.

5. The method of claim 3, further comprising selectively feeding a liquid fertilizer, a mineral, and/or a microorganism to the cultivation managing containers to achieve a target cultivation for the edible plan, wherein the supply of the air to the air circulation channel uses a blowing fan (10) disposed at one end of the air duct to allow a forced air flow through the air duct.

6. A method for extending a harvesting period of an edible plant to maximize a yield thereof on a bare ground, the method comprising:
providing a plurality of cultivation managing containers (1), each container including a moisture absorption material (2) including coarse/fine stone pieces, pearlite, and/or coarse sands on a bottom thereof, wherein the moisture absorption material is stacked at a predetermined height, wherein water is filled in the cultivation managing container at the same height as the predetermined height to supply a moisture to the moisture absorption material, wherein the cultivation managing container includes a moisture communication material (6) on the moisture absorption material, and a fertilizer mixed soil on the moisture communication material;
arranging the plurality of cultivation managing containers on supports (7), wherein each support is configured to support each cultivation managing container at a height determined such that a worker or operator harvests an edible plant in a standing state, wherein the at least two supports are spacedly arranged to establish an air circulation channel;
rooting an array of cultivation ports (5) into each cultivation managing container, wherein each cultivation port is rooted into the fertilizer mixed soil of the cultivation managing container, wherein the plural cultivation ports are spaced from each other to keep a cultivation space of the edible plant, wherein a seeding plant and/or grown plant for the edible plant is planted in the cultivation port; and
when a root zone of the edible plant has an increase in a respiration amount thereof due to a temperature rise in a hot condition, discharging the water in the cultivation managing container to increase a porosity therein by a reduced amount of the water, thereby to increase a dissolved oxygen amount due to the increase in the porosity to suppress a bolting of the edible plant.

## Patentansprüche

1. Pflanzenkultivierungssystem zum Verlängern einer Ernteperiode einer essbaren Pflanze, um ihren Ertrag zu maximieren, wobei das System umfasst:
eine Anordnung von Kultivierungsmanagementbehältern (1), wobei jeder Behälter ein Feuchtigkeitsabsorptionsmaterial (2) umfassend grobe/feine Steinstücke, Perlit, und/oder groben Sand auf einem Boden von diesem umfasst, wobei das Feuchtigkeitsabsorptionsmaterial (2) auf eine vorgegebene Höhe geschichtet ist, wobei Wasser in den Kultivierungsmanagementbehälter (1) auf dieselbe Höhe wie die vorgegebene Höhe gefüllt ist, um dem Feuchtigkeitsabsorptionsmaterial (2) Feuchtigkeit zuzuführen, wobei der Kultivierungsmanagementbehälter (1) ein Feuchtigkeitsaustauschmaterial (3) auf dem Feuchtigkeitsabsorptionsmaterial (2) und mit Düngemittel gemischte Erde (4) auf dem Feuchtigkeitsaustauschmaterial (3) umfasst;
eine Reihe von Kultivierungsports (5), die in jedem Kultivierungsmanagementbehälter (1) angeordnet sind, wobei jeder Kultivierungsport (5) in die mit Düngemittel gemischte Erde (4) des Kultivierungsmanagementbehälters verwurzelt ist, wobei die mehreren Kultivierungsports (5) voneinander beabstandet sind, um einen Kultivierungsraum der essbaren Pflanze einzuhalten, wobei ein Setzling und/oder eine ausgewachsene Pflanze für die essbare Pflanze in den Kultivierungsport (5) gepflanzt ist;
wenigstens zwei Träger (7), die dazu konfiguriert sind, jeden Kultivierungsmanagementbehälter (1) auf einer vorgegebenen Höhe derart zu tragen, dass ein Arbeiter oder Bediener die essbare Pflanze im Stehen erntet, wobei die wenigstens zwei Träger (7) beabstandet angeordnet sind, um einen Luftzirkulationskanal zu sichern;
wenigstens einen Luftkanal (9), der zwischen den benachbarten Trägern (7) angeordnet ist, wobei sich der Luftkanal (9) in der Anordnungsrichtung der Kultivierungsmanagementbehälter erstreckt, wobei der Luftkanal (9) ein Luftloch (12) aufweist, um eine selektive Zufuhr von kalter und warmer Luft zu dem Luftzirkulationskanal zu erlauben, um dadurch eine Transpiration der essbaren Pflanze zu verbessern, um ein Schießen der essbaren Pflanze zu unterdrücken; und
einen Blasventilator (10), der an einem Ende des Luftkanals (9) angeordnet ist, um eine erzwungene Luftströmung durch den Luftkanal (9) zu erlauben.

2. System nach Anspruch 1, ferner umfassend:
eine Behälterschiene (11), die zwischen den Trägern (7) und den Kultivierungsmanagementbehältern (1) angeordnet ist,
wobei die Behälterschiene dazu konfiguriert ist, ein freies Gleiten der Kultivierungsmanagementbehälter darauf zu erlauben, wobei sich die Behälterschiene in der Anordnungsrichtung der Kultivierungsmanagementbehälter erstreckt, wobei das freie Gleiten der Kultivierungsmanagementbehälter einen Raum zwischen den angrenzenden Kultivierungsmanagementbehältern einstellt, um einen Kultivierungsraum für die essbare Pflanze einzuhalten; und
eine Nährstofftropfvorrichtung, die dazu konfiguriert ist, eine selektive Zufuhr eines flüssigen Düngemittels, eines Minerals und/oder eines Mikroorganismus zu den Kultivierungsmanagementbehältern zu erlauben, um dadurch eine Zielkultivierung für die essbare Pflanze zu verwirklichen.

3. Verfahren zum Verlängern einer Ernteperiode einer essbaren Pflanze, um ihren Ertrag in einer Anlage zu maximieren, wobei das Verfahren umfasst:
Bereitstellen einer Vielzahl von Kultivierungsmanagementbehältern (1), wobei jeder Behälter ein Feuchtigkeitsabsorptionsmaterial (2) umfassend grobe/feine Steinstücke, Perlit, und/oder groben Sand auf einem Boden von diesem umfasst, wobei das Feuchtigkeitsabsorptionsmaterial auf eine vorgegebene Höhe geschichtet ist, wobei Wasser in den Kultivierungsmanagementbehälter auf dieselbe Höhe wie die vorgegebene Höhe gefüllt ist, um dem Feuchtigkeitsabsorptionsmaterial Feuchtigkeit zuzuführen, wobei der Kultivierungsmanagementbehälter ein Feuchtigkeitsaustauschmaterial (3) auf dem Feuchtigkeitsabsorptionsmaterial und mit Düngemittel gemischte Erde (4) auf dem Feuchtigkeitsaustauschmaterial umfasst;
Anordnen der Vielzahl von Kultivierungsmanagementbehältern auf Trägern (7), wobei jeder Träger dazu konfiguriert ist, jeden Kultivierungsmanagementbehälter auf einer Höhe zu tragen, die derart bestimmt ist, dass ein Arbeiter oder Bediener eine essbare Pflanze im Stehen erntet, wobei die wenigstens zwei Träger beabstandet angeordnet sind, um einen Luftzirkulationskanal zu sichern;
Verwurzeln einer Reihe von Kultivierungsports (5) in jeden Kultivierungsmanagementbehälter, wobei jeder Kultivierungsport in die mit Düngemittel gemischte Erde des Kultivierungsmanagementbehälters verwurzelt wird, wobei die mehreren Kultivierungsports voneinander beabstandet werden, um einen Kultivierungsraum der essbaren Pflanze einzuhalten, wobei ein Setzling und/oder eine ausgewachsene Pflanze für die essbare Pflanze in den Kultivierungsport gepflanzt wird; und
Durchführen einer selektiven Zufuhr von kalter und warmer Luft zu dem Luftzirkulationskanal, um eine Transpiration der essbaren Pflanze zu verbessern, um ein Schießen der essbaren Pflanzen zu unterdrücken, unter Verwendung wenigstens eines Luftkanals (9), der zwischen den benachbarten Trägern angeordnet ist und sich in der Anordnungsrichtung der Kultivierungsmanagementbehälter erstreckt, wobei der Luftkanal ein Luftloch aufweist, um dem Luftzirkulationskanal die Luft zuzuführen.

4. Verfahren nach Anspruch 3, ferner umfassend ein Verschieben der Kultivierungsmanagementbehälter auf einer Behälterschiene (11) derart, dass benachbarte essbare Pflanzen, die zu ausgewachsenen Pflanzen werden, einander nicht kontaktieren, wobei die Schiene zwischen den Trägern und den Kultivierungsmanagementbehältern angeordnet ist und sich in einer Anordnungsrichtung der Träger und der Kultivierungsmanagementbehälter erstreckt; und
nachdem die ausgewachsenen essbaren Pflanzen geerntet sind, Wiederholen des Verwurzelungsvorgangs von neuen Kultivierungsports, der selektiven Zufuhr von kalter und warmer Luft, und des Verschiebevorgangs der Kultivierungsmanagementbehälter.

5. Verfahren nach Anspruch 3, ferner umfassend ein selektives Zuführen eines flüssigen Düngemittels, eines Minerals und/oder eines Mikroorganismus zu den Kultivierungsmanagementbehältern, um eine Zielkultivierung für die essbare Pflanze zu verwirklichen, wobei für die Zufuhr der Luft zu dem Luftzirkulationskanal ein Blasventilator (10) verwendet wird, der an einem Ende des Luftkanals angeordnet ist, um eine erzwungene Luftströmung durch den Luftkanal zu erlauben.

6. Verfahren zum Verlängern einer Ernteperiode einer essbaren Pflanze, um ihren Ertrag auf einem unbewachsenen Boden zu maximieren, wobei das Verfahren umfasst:
Bereitstellen einer Vielzahl von Kultivierungsmanagementbehältern (1), wobei jeder Behälter ein Feuchtigkeitsabsorptionsmaterial (2) umfassend grobe/feine Steinstücke, Perlit, und/oder groben Sand auf einem Boden von diesem umfasst, wobei das Feuchtigkeitsabsorptionsmaterial auf eine vorgegebene Höhe geschichtet ist, wobei Wasser in den Kultivierungsmanagementbehälter auf dieselbe Höhe wie die vorgegebene Höhe gefüllt ist, um dem Feuchtigkeitsabsorptionsmaterial Feuchtigkeit zuzuführen, wobei der Kultivierungsmanagementbehälter ein Feuchtigkeitsaustauschmaterial (3) auf dem Feuchtigkeitsabsorptionsmaterial und mit Düngemittel gemischte Erde auf dem Feuchtigkeitsaustauschmaterial umfasst;
Anordnen der Vielzahl von Kultivierungsmanagementbehältern auf Trägern (7), wobei jeder Träger dazu konfiguriert ist, jeden Kultivierungsmanagementbehälter auf einer Höhe zu tragen, die derart bestimmt ist, dass ein Arbeiter oder Bediener eine essbare Pflanze im Stehen erntet, wobei die wenigstens zwei Träger beabstandet angeordnet sind, um einen Luftzirkulationskanal zu sichern;
Verwurzeln einer Reihe von Kultivierungsports (5) in jeden Kultivierungsmanagementbehälter, wobei jeder Kultivierungsport in die mit Düngemittel gemischte Erde des Kultivierungsmanagementbehälters verwurzelt wird, wobei die mehreren Kultivierungsports voneinander beabstandet werden, um einen Kultierungsraum der essbaren Pflanze einzuhalten, wobei ein Setzling und/oder eine ausgewachsene Pflanze für die essbare Pflanze in den Kultivierungsport gepflanzt wird; und
wenn ein Wurzelbereich der essbaren Pflanze eine Zunahme einer Respirationsmenge von dieser aufgrund eines Temperaturanstiegs in einem warmen Zustand aufweist, Abführen des Wassers in dem Kultivierungsmanagementbehälter, um durch eine reduzierte Menge des Wassers eine Porosität darin zu erhöhen, um dadurch aufgrund der Zunahme der Porosität eine Menge an gelöstem Sauerstoff zu erhöhen, um ein Schießen der essbaren Pflanzen zu unterdrücken.

## Revendications

1. Système de culture de plantes destiné à allonger une période de récolte d'une plante comestible afin d'en optimiser son rendement, le système comportant :
- un agencement de conteneurs de gestion de culture (1), chaque conteneur comprenant un matériau absorbant l'humidité (2) comprenant des morceaux de pierre fine ou à gros grain, de la perlite, et/ou du sable à gros grains sur un fond de ceux-ci, où le matériau absorbant l'humidité (2) est empilé à une hauteur prédéterminée, où de l'eau est remplie dans le conteneur de gestion de culture (1) à la même hauteur que la hauteur prédéterminée afin de fournir une humidité au matériau absorbant l'humidité (2), où le conteneur de gestion de culture (1) comprend un matériau communiquant l'humidité (3) sur le matériau absorbant l'humidité (2), et de la terre (4) mélangée avec de l'engrais sur le matériau (3) communiquant l'humidité ;
- une série de godets de culture (5) agencés dans chaque conteneur de gestion de culture (1), où chaque godet de culture (5) est enraciné dans la terre mélangée avec l'engrais (4) du conteneur de gestion de culture,
conteneur dans lequel la pluralité des godets de culture (5) sont espacés les uns des autres afin de conserver un espace pour la culture de la plante comestible, où une semence de plante et/ou une pousse de plante pour la plante comestible est plantée dans le godet de culture (5) ;
- au moins deux supports (7) configurés pour supporter chaque conteneur de gestion de culture (1) à une hauteur déterminée de telle sorte qu'un travailleur ou opérateur récolte la plante comestible en station debout, où les au moins deux supports (7) sont agencés de manière espacée afin d'assurer un canal de circulation d'air ;
- au moins un conduit d'air (9) disposé entre les supports voisins (7), où le conduit d'air (9) s'étend dans la direction d'agencement des conteneurs de gestion de culture, où le conduit d'air (9) présente un trou d'air (12) pour permettre une alimentation sélective en air froid et chaud du canal de circulation d'air, en améliorant ainsi la transpiration de la plante comestible afin de supprimer la montée en graine de la plante comestible ; et
- un ventilateur de refoulement (10) disposé à une extrémité du conduit d'air (9) pour permettre un écoulement d'air forcé à travers le conduit d'air (9).

2. Système selon la revendication 1, comportant en outre :
un rail (11) pour conteneurs disposé entre les supports (7) et les conteneurs de gestion de culture (1), où le rail pour conteneurs est configuré pour permettre un glissement libre des conteneurs de gestion de culture sur celui-ci, où le rail pour conteneurs s'étend dans la direction d'agencement des conteneurs de gestion de culture, où le glissement libre des conteneurs de gestion de culture ajuste un espace entre les conteneurs de gestion de culture adjacents afin de conserver un espace pour la culture de la plante comestible ; et un dispositif d'alimentation au compte-gouttes configuré pour permettre une alimentation sélective en engrais liquide, en minéral, et/ou en microorganisme des contenants de gestion de culture, et ainsi réaliser une culture cible de la plante comestible.

3. Procédé destiné à allonger une période de récolte d'une plante comestible afin d'en optimiser son rendement dans une installation, le procédé consistant à :
- fournir une pluralité de contenants de gestion de culture (1), chaque conteneur comprenant un matériau absorbant l'humidité (2) comprenant des morceaux de pierre fine ou à gros grain, de la perlite, et/ou du sable à gros grains sur un fond de ceux-ci, où le matériau absorbant l'humidité est empilé à une hauteur prédéterminée, où de l'eau est remplie dans le conteneur de gestion de culture à la même hauteur que la hauteur prédéterminée afin de fournir une humidité au matériau absorbant l'humidité, où le conteneur de gestion de culture comprend un matériau communiquant l'humidité (3) sur le matériau absorbant l'humidité, et de la terre mélangée avec de l'engrais (4) sur le matériau communiquant l'humidité ;
- agencer la pluralité de conteneurs de gestion de culture sur des supports (7), où chaque support est configuré pour supporter chaque conteneur de gestion de culture à une hauteur déterminée de telle sorte qu'un travailleur ou opérateur récolte une plante comestible en station debout, où les au moins deux supports sont agencés de manière espacée afin d'établir un canal de circulation d'air ;
- enraciner une série de godets de culture (5) dans chaque conteneur de gestion de culture,
conteneur de gestion dans lequel chaque godet de culture est enraciné dans de la terre mélangée avec de l'engrais du conteneur de gestion de culture, où la pluralité des godets de culture sont espacés les uns des autres afin de conserver un espace pour la culture de la plante comestible, où une semence de plante et/ou une pousse de plante pour la plante comestible est plantée dans le godet de culture ; et
- réaliser une alimentation sélective en air froid et chaud vers le canal de circulation d'air afin d'améliorer la transpiration de la plante comestible et supprimer la montée en graine de la plante comestible, à l'aide d'au moins un conduit d'air (9) disposé entre les supports voisins et s'étendant dans la direction d'agencement des conteneurs de gestion de culture, où le conduit d'air présente un trou d'air afin d'alimenter en air le canal de circulation d'air.

4. Procédé selon la revendication 3, consistant en outre à faire glisser les conteneurs de gestion de culture sur un rail (11) pour conteneurs de telle sorte que des plantes comestibles voisines en devenant des pousses de plantes ne viennent pas en contact les unes avec les autres, où le rail est disposé entre le support et le conteneur de gestion de culture, et s'étend dans une direction d'agencement des supports et des conteneurs de gestion de culture ; et
une fois que les pousses de plantes comestibles sont récoltées, répéter l'opération de l'enracinement de nouveaux godets de culture, l'alimentation sélective en air froid et chaud, et l'opération de glissement des conteneurs de gestion de culture.

5. Procédé selon la revendication 3, consistant en outre à alimenter sélectivement en engrais liquide, en minéral, et/ou en microorganisme les conteneurs de gestion de culture afin d'obtenir une culture cible de la plante comestible, où l'alimentation en air du canal de circulation d'air utilise un ventilateur de refoulement (10) disposé à une extrémité du conduit d'air pour permettre un écoulement d'air forcé à travers le conduit d'air.

6. Procédé destiné à allonger une période de récolte d'une plante comestible afin d'en optimiser son rendement sur un sol nu, le procédé consistant à :
- fournir une pluralité de conteneurs de gestion de culture (1), chaque conteneur comprenant un matériau absorbant l'humidité (2) comprenant des morceaux de pierre fine ou à gros grain, de la perlite, et/ou du sable à gros grains sur un fond de ceux-ci, où le matériau absorbant l'humidité est empilé à une hauteur prédéterminée, où de l'eau est remplie dans le conteneur de gestion de culture à la même hauteur que la hauteur prédéterminée afin de fournir une humidité au matériau absorbant l'humidité, où le conteneur de gestion de culture comprend un matériau communiquant l'humidité (6) sur le matériau absorbant l'humidité, et de la terre mélangée avec de l'engrais sur le matériau communiquant l'humidité ;
- agencer la pluralité de conteneurs de gestion de culture sur des supports (7), où chaque support est configuré pour supporter chaque conteneur de gestion de culture à une hauteur déterminée de telle sorte qu'un travailleur ou opérateur récolte une plante comestible en station debout, où les au moins deux supports sont agencés de manière espacée afin d'établir un canal de circulation d'air ;
- enraciner une série de godets de culture (5) dans chaque conteneur de gestion de culture, où chaque godet de culture est enraciné dans de la terre mélangée avec de l'engrais du conteneur de gestion de culture, où la pluralité des godets de culture sont espacés les uns des autres afin de conserver un espace pour la culture de la plante comestible, où une semence de plante et/ou une pousse de plante pour la plante comestible est plantée dans le godet de culture ; et
- lorsqu'une zone de racine de la plante comestible présente une augmentation de sa quantité de respiration du fait d'une augmentation de la température dans des conditions chaudes, déverser de l'eau dans le conteneur de gestion de culture, afin d'augmenter une porosité à l'intérieur par une quantité d'eau réduite, pour ainsi augmenter une quantité d'oxygène dissoute du fait de l'augmentation de la porosité afin de supprimer une montée en graine de la plante comestible.
